# EUROPÄISCHE PATENTSCHRIFT

(11) **EP 2 086 804 B1**
(45) Veröffentlichungstag und Bekanntmachung des Hinweises auf die Patenterteilung: **01.12.2010**
(21) Anmeldenummer: 07803567.2
(22) Anmeldetag: 20.09.2007
(51) Int. Cl.: B60S 1/38

(54) **WISCHBLATT**
WIPER BLADE
ESSUIE-GLACE

(30) Priorität: 07.11.2006 DE 102006052464
(43) Veröffentlichungstag der Anmeldung: 12.08.2009
(73) Patentinhaber: Robert Bosch GmbH, 70442 Stuttgart (DE)
(72) Erfinder: AZNAG, Mohamed, 3271 Scherpenheuvel-Zichem (BE)
(86) Internationale Anmeldenummer: PCT/EP2007/059986
(87) Internationale Veröffentlichungsnummer: WO 2008/055742

(56) Entgegenhaltungen:
- DE-A1- 2 253 558
- DE-A1- 3 934 203
- DE-C- 935 297
- DE-C- 935 297
- FR-A- 2 755 926
- GB-A- 647 967
- US-A- 2 659 097
- US-A- 2 659 097
- US-A- 3 139 644
- US-A- 5 487 205

## Beschreibung

### Stand der Technik

Die Erfindung geht von einem Wischblatt nach dem Oberbegriff des Anspruchs 1 aus.

Aus der DE 103 34 609 A1 ist ein Wischblatt mit einem Grundkörper und einem angeformten Spoiler bekannt, wobei der Spoiler und der Grundkörper aus unterschiedlichen Materialien bestehen und in einem Mehrstoffextrudierverfahren hergestellt werden. Der Grundkörper besitzt in seiner Kopfleiste einen Längskanal, in dem eine bandartige, vorgekrümmte Federschiene angeordnet ist.

Aus der US-B-2659097 ist ein Scheibenwischblatt mit den Merkmal des Oberbegriff des Anspruchs 1 bekannt. Ein gattungsgemäβes Wischblatt ist aus der DE 935297 bekannt.

### Offenbarung der Erfindung

Nach der Erfindung weist der Träger zur Aufnahme des Wischgummis ein zum Wischgummi hin offenes Querschnittprofil auf, und das Federelement ist eine Zugfeder, die zwischen den Enden des Trägers eingespannt ist. Die Zugfeder kann jedes in Längsrichtung elastische Element sein, z.B. ein Spanndraht, ein elastisches Band, eine Schraubenfeder oder dgl. Die Zugfeder ist an einem Stift befestigt, der am Ende des Trägers angeordnet ist und dessen Schenkel miteinander verbindet. Die Enden des Stifts werden zweckmäßigerweise vernietet, sodass sie unverlierbar mit dem Träger verbunden sind. Ist die Zugfeder eine Schraubenfeder, so kann ein an dem Ende der Zugfeder angeformter Haken an dem Stift eingehängt werden.

Der Wischgummi ist nachgiebig auf der Zugfeder aufgehängt, sodass er unter dem Einfluss einer Anpresskraft bei der Wischbewegung unterschiedlichen Krümmungen einer Fahrzeugscheibe folgen kann. Seine maximale seitliche Nachgiebigkeit wird durch die Schenkel des u-förmigen Profils des Trägers begrenzt.

Der Träger, der zweckmäßigerweise aus einem Blech in einem Stanz- und Biegeverfahren hergestellt wird, hat gemäß einer ersten Ausgestaltung der Erfindung im mittleren Bereich Lagerelemente, die in Form von Lappen aus seinen seitlichen Schenkeln ausgeklinkt und zu der Seite umgebogen sind, die dem Wischgummi abgewandt ist. Die Lagerelemente können Lagerbohrungen oder Lagerzapfen besitzen, um das Wischblatt gelenkig mit einem Wischarm zu verbinden. Die zweite Möglichkeit besteht darin, dass an einem Ende des Trägers ein Wischarm angeformt ist.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Teilansicht eines erfindungsgemä- ßen Wischblatts,
- Fig. 2: eine perspektivische Ansicht eines Wischblattendes von unten und
- Fig. 3: ein Wischblatt auf einer Fahrzeugscheibe.

### Ausführungsformen der Erfindung

Ein Wischblatt 10 besitzt einen Träger 12 und einen Wischgummi 24. Der Träger 12 weist ein zum Wischgummi 24 hin offenes, u-förmiges Profil mit zwei seitlichen Schenkeln 14, 16 auf. Der Wischgummi 24 ragt mit einer Wischleiste 26 aus dem Träger 12 vor und gleitet während einer Wischbewegung in Schwenkrichtung 34 über eine Fahrzeugscheibe 32.

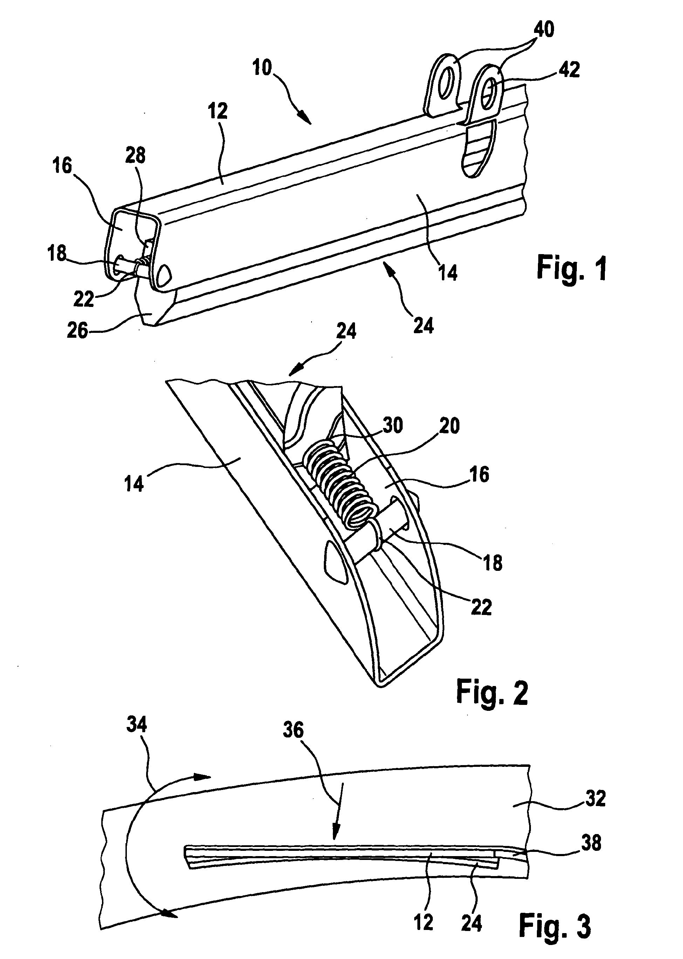

Der Wischgummi 24 hat in seinem Kopfteil 28 einen Längskanal 30, durch den eine Zugfeder 20 in Form einer Schraubenfeder geführt ist. Diese ist zwischen zwei Stiften 18 an den Enden des Trägers 12 eingespannt, indem jeweils ein am Ende der Schraubenfeder 20 angeformter Haken 22 den zugeordneten Stift 18 umfasst. Der Stift 18 verläuft quer zur Längsrichtung des Wischblatts 10 und ist an seinen Enden mit den seitlichen Schenkeln 14, 16 des Trägers 12 vernietet. Im mittleren Bereich ist nach der Ausführung nach Fig. 1 ein Lagerelement 40 im Form von zwei Laschen aus den seitlichen Schenkeln 14, 16 ausgeklinkt und auf die der Wischleiste 26 abgewandten Seite umgebogen. Das Lagerelement 40 weist Lagerbohrungen 42 auf, durch die das Wischblatt 10 gelenkig mit einem nicht dargestellten Wischarm verbunden werden kann.

Bei einer weiteren Ausgestaltung der Erfindung nach Fig. 3 ist ein Wischarm 38 unmittelbar an einem Ende des Trägers 12 angeformt. Der Wischarm 38 übt auf den Träger 12 eine Kraft in Belastungsrichtung 36 auf den Träger aus, sodass der Wischergummi 24 gegen die Fahrzeugscheibe 32 gedrückt wird. Auf Grund der Zugfeder 20 kann der Wischgummi 24 in entgegengesetzter Richtung nachgeben, sodass sich seine Wischleiste 26 mit einer angemessenen Druckverteilung bei der Wischbewegung in Schwenkrichtung 34 der Krümmung der Fahrzeugscheibe 32 anpassen kann.

## Patentansprüche

1. Wischblatt (10) mit einem Wischgummi (24), der an einem Träger (12) befestigt ist und im Bereich seines Kopfteils (28) einen Längskanal (30) besitzt, in dem ein Federelement (20) angeordnet ist, wobei der Träger (12) zur Aufnahme des Wischgummis (24) ein zum Wischgummi (24) offenes Querschnittprofil aufweist und das Federelement (20) eine Zugfeder (20) ist, die zwischen den Enden des Trägers (12) eingespannt ist, wobei der Träger (12) ein uförmiges Querschnittprofil aufweist, dessen Schenkel (14, 18) an ihren Enden jeweils durch einen Stift (18) verbunden sind, an dem die Zugfeder (20) befestigt ist, **dadurch gekennzeichnet, dass** im mittleren Bereich des Trägers (12) aus seinen seitlichen Schenkeln (14, 16) Lagerelemente (40) in Form von Lappen ausgeklinkt und zur Seite umgebogen sind, die dem Wischgummi (24) abgewandt ist oder an einem Ende des Trägers (12) ein Wischarm (38) angeformt ist.

2. Wischblatt (10) nach Anspruch 1, **dadurch gekennzeichnet, dass** die Zugfeder (20) eine Schraubenfeder ist, an deren Ende ein Haken (22) angeformt ist, der den Stift (18) umfasst.

## Claims

1. Wiper blade (10) with a wiper blade rubber (24) which is fastened to a support (12) and has a longitudinal channel (30), in which a spring element (20) is arranged, in the region of its head part (28), wherein, in order to receive the wiper blade rubber (24), the support (12) has a cross-sectional profile open towards the wiper blade rubber (24), and the spring element (20) is a tension spring (20) which is clamped between the ends of the support (12), wherein the support (12) has a U-shaped cross-sectional profile, the limbs (14, 18) of which are connected at the ends thereof by a respective pin (18) to which the tension spring (20) is fastened, **characterized in that**, in the central region of the support (12), bearing elements (40) in the form of tabs are disengaged from the lateral limbs (14, 16) of the support and are bent over to the side which faces away from the wiper blade rubber (24), or a wiper arm (38) is integrally formed at one end of the support (12).

2. Wiper blade (10) according to Claim 1, **characterized in that** the tension spring (20) is a helical spring, at the end of which a hook (22) which surrounds the pin (18) is integrally formed.

## Revendications

1. Balai d'essuie-glace (10) comprenant une raclette d'essuie-glace (24) qui est fixée sur un support (12), et qui possède, dans la région de sa partie de tête (28), un canal longitudinal (30), dans lequel est disposé un élément de ressort (20), le support (12) présentant, pour recevoir la raclette d'essuie-glace (24), un profilé en section transversale ouvert vers la raclette d'essuie-glace (24), et l'élément de ressort (20) étant un ressort de traction (20) qui est serré entre les extrémités du support (12), le support (12) présentant un profilé en section transversale en forme de U, dont les branches (14, 18) sont connectées à leurs extrémités à chaque fois par une goupille (18), sur laquelle est fixé le ressort de traction (20), **caractérisé en ce que**, dans la région centrale du support (12), à partir de ses branches latérales (14, 16), des éléments de palier (40) en forme de languettes sont articulés et sont recourbés vers le côté opposé à la raclette d'essuie-glace (24), ou **en ce qu'**un bras d'essuie-glace (38) est façonné à une extrémité du support (12).

2. Balai d'essuie-glace (10) selon la revendication 1, **caractérisé en ce que** le ressort de traction (20) est un ressort à boudin à l'extrémité duquel est façonné un crochet (22) qui comprend la goupille (18).
